# EUROPÄISCHE PATENTSCHRIFT

(11) **EP 0 388 910 B1**
(45) Veröffentlichungstag und Bekanntmachung des Hinweises auf die Patenterteilung: **31.08.1994**
(21) Anmeldenummer: 90105302.5
(22) Anmeldetag: 21.03.1990
(51) Int. Cl.: C07F 9/53, C07F 9/32, C07F 9/40

(54) **Verfahren zur Herstellung von Phosphinoverbindungen**
Procedure for the preparation of phosphino derivatives
Procédé de préparation de dérivés phosphino

(30) Priorität: 23.03.1989 DE 3909564
(43) Veröffentlichungstag der Anmeldung: 26.09.1990
(73) Patentinhaber: Hoechst Schering AgrEvo GmbH, 13342 Berlin (DE)
(72) Erfinder: Scheffel, Günter, Dr., D-8263 Burghausen (DE); Lachhein, Stephen, Dr., D-6238 Hofheim am Taunus (DE)

(56) Entgegenhaltungen:
- DE-A- 1 144 275
- US-A- 2 957 931

## Beschreibung

Gegenstand der Erfindung ist ein Verfahren zur Herstellung von Phosphinoverbindungen der Formel (I) 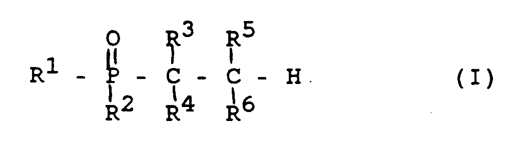
worin
- R¹ und R²: unabhängig voneinander Alkyl, Alkoxy oder, gegebenenfalls substituiertes, Phenyl,
- R³ und R⁵: unabhängig voneinander Wasserstoff, Alkyl, Phenyl, das unsubstituiert oder ein- oder mehrfach durch Halogen oder ein- oder zweifach durch Alkoxy substituiert ist, Alkoxycarbonyl, Alkoxycarbonylalkoxy, Halogen, Cyano, Alkoxy, Alkoxyalkoxy, Alkylcarbonyl, Alkoxycarbonylalkyl, Carbamoyl, Alkylaminocarbonyl oder Dialkylaminocarbonyl,
- R⁴ und R⁶: unabhängig voneinander Wasserstoff, Alkyl, Phenyl, das unsubstituiert oder ein- oder mehrfach durch Halogen oder ein- oder zweifach durch Alkoxy substituiert ist, Halogen, Alkoxycarbonyl, Alkoxycarbonylalkoxy, Cyano, Alkoxy, Alkoxyalkoxy, Alkylcarbonyl, Alkoxycarbonylalkyl, Carbamoyl, Alkylaminocarbonyl, Dialkylaminocarbonyl oder miteinander verbunden einen bivalenten Rest der Formel

- CO - R⁷ - CO -,

in welcher
- R⁷: Sauerstoff, ein Rest der Formel NR*, worin R* für Wasserstoff, C₁-C₆-Alkyl oder Phenyl, das unsubstituiert oder ein- oder mehrfach durch Halogen substituiert ist, steht, oder Schwefel ist,
bedeuten, dadurch gekennzeichnet, daß man eine Verbindung der Formel (II) 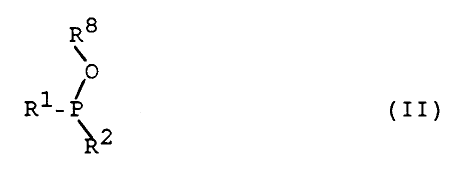
worin
- R¹ und R²: die vorbeschriebenen Bedeutungen haben und
- R⁸: Alkyl oder gegebenenfalls substituiertes Phenyl ist,
zusammen mit einer Verbindung der Formel (III) 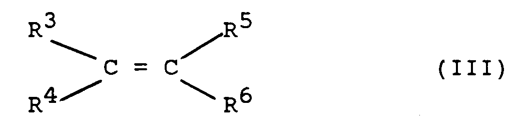
worin R³,R⁴,R⁵,R⁶ und R⁷ die vorbeschriebenen Bedeutungen haben,
und
mit einer mindestens äquimolaren Menge einer protischen organischen Substanz, ausgenommen Carbonsäuren, umsetzt.

Alkyl bedeutet beispielsweise geradkettiges, verzweigtes oder cyclisches Alkyl wie Methyl, Ethyl, n- und i-Propyl, n-, i-, t- und 2-Butyl, Pentylisomere, Hexylisomere, Cyclopentyl, Cyclohexyl, Heptyl- und Octylisomere. Alkoxy bedeutet Alkyloxy mit beispielsweise den im Alkylrest vorstehend für Alkyl genannten Bedeutungen. Gegebenenfalls substituiertes Phenyl bedeutet unsubstituiertes Phenyl und beispielsweise durch Halogen, niederes Alkoxy oder niederes Alkyl substituiertes Phenyl. Halogen bedeutet Fluor, Chlor, Brom und/oder Jod, vorzugsweise Chlor.

Von besonderem Interesse ist ein erfindungsgemäßes Verfahren, wobei
- R¹ und R²: unabhängig voneinander C₁-C₈-Alkyl, Phenyl oder C₁-C₆-Alkoxy, vorzugsweise Methyl, Ethyl, Phenyl, Methoxy, Ethoxy, Propoxy oder Butoxy, insbesondere Methyl, Ethyl, Phenyl, Methoxy oder Ethoxy,
- R³ und R⁵: unabhängig voneinander Wasserstoff, C₁-C₆-Alkyl, Phenyl, das unsubstituiert oder ein- oder mehrfach durch Halogen substituiert ist, C₂-C₆-Alkoxycarbonyl, C₂-C₆-Alkylcarbonyl, (C₁-C₄-Alkyl)-carbonyl-C₁-C₁₀-alkyl, Halogen, Cyano, C₁-C₆-Alkoxy, (C₁-C₄-Alkoxy)-C₁-C₄-alkoxy, Carbamoyl, N-(C₁-C₄-Alkyl)-aminocarbonyl, N,N-Di-(C₁-C₄-Alkyl)-aminocarbonyl, 1-(C₁-C₄-Alkoxy)-1-hydroxy-methyl oder 1,1-Bis-(C₁-C₄-Alkoxy)-methyl,
- R⁴ und R⁶: unabhängig voneinander Wasserstoff, C₁-C₆-Alkyl, Phenyl, das unsubstituiert oder ein- oder mehrfach durch Halogen substituiert ist, C₂-C₆-Alkoxycarbonyl, C₂-C₆-Alkylcarbonyl, (C₁-C₄-Alkyl)-carbonyl-C₁-C₁₀-alkyl, Halogen, Cyano, C₁-C₆-Alkoxy, (C₁-C₄-Alkoxy)-C₁-C₄-alkoxy, Carbamoyl, N-(C₁-C₄-Alkyl)-aminocarbonyl, N,N-Di-(C₁-C₄-Alkyl)-aminocarbonyl, 1-(C₁-C₄-Alkoxy)-1-hydroxy-methyl oder 1,1-Bis-(C₁-C₄-Alkoxy)-methyl oder miteinander verbunden einen bivalenten Rest der Formel

- CO - R⁷ - CO -,

in welcher
- R⁷: Sauerstoff, ein Rest der Formel NR*, worin R* für H, (C₁-C₆)-Alkyl oder Phenyl, das unsubstituiert ist oder ein- bis dreifach durch Halogen substituiert ist, steht, oder Schwefel ist,
bedeuten.

Besonders bevorzugt ist das erfindungsgemäße Verfahren, in welchem
- R¹ und R²: unabhängig voneinander Methyl, Ethyl, Methoxy, Ethoxy oder Phenyl,
- R³: Wasserstoff,
- R⁴: Wasserstoff oder (C₁-C₄-Alkoxy)-carbonyl,
- R⁵: Wasserstoff,
- R⁶: Wasserstoff, Halogen, Cyano, (C₁-C₄-Alkoxy)-carbonyl oder Carbamoyl, vorzugsweise (C₁-C₂-Alkoxy)-carbonyl oder Cyano
bedeuten.

Die Verbindungen der Formel (I) sind wertvolle Zwischenprodukte bei der Herstellung von Pflanzenschutzmitteln (s. z.B. EP-A-30424, US-A-4,399,287) und Flammschutzmitteln (Angewandte Makromolekulare Chemie 105, S. 203-215 (1982) und dort zitierte Literatur). Bekannt ist, daß man einige Vertreter der Verbindungen der Formel (I), z.B. durch Umsetzung der Verbindungen der Formel (II) mit ungesättigten Fettsäuren erhalten kann (siehe Houben-Weyl, Methoden der org. Chemie, Band 12/1, S. 259-260 (1963) und dort zitierte Literatur). Bei diesem Verfahren werden jedoch lediglich Ausbeuten von 10 - 50 % erhalten, was aus technischer und ökologischer Sicht durch die hohe Abluft und Abfallbelastung von großem Nachteil ist.

Ferner ist aus der US-A 2 957 937 bekannt, daß mun Verbindungen der Formel I herstellen kann durch Umsetzung von Olefinen mit Phosphorverbindungen, die mindesten eine P-H-Bindung aufweisen, z.B. Dialkylphosphit.

Die unumgesetzten Mengen der Phosphorkomponente (II) müssen aufwendig entsorgt werden, da diese Verbindungen feuergefährlich, toxisch und geruchsbelästigend sind (siehe Houben-Weyl, Methoden der org. Chemie, Band 12/1, Seite 14). Außerdem bedingt durch die schlechten Ausbeuten schließen sich nach beendeter Reaktion aufwendige Reinigungsoperationen an.

Die vorliegende Erfindung betrifft im Vergleich zu den bekannten Verfahren ein hochselektives, billiges und einfaches Verfahren, das die Phosphinoverbindungen der Formel (I) in nahezu quantitativen Ausbeuten und hohen Reinheiten liefert.

Die in nahezu quantitativer Ausbeute erhaltenen Rohprodukte sind meist so rein, daß sie für weitere chemische Umsetzungen direkt eingesetzt werden können.

Das erfindungsgemäße Verfahren ist aus mehreren Gründen als überraschend anzusehen. So führen beispielsweise die Umsetzungen der Phosphorkomponenten (II) mit den Alkenen (III) analog Literaturbeispielen ohne Verwendung einer protischen organische Substanz nicht zu den Produkten (I). Es werden lediglich stark viskose polymere Produkte erhalten (siehe Anionische Polymerisation, B. Vollmert, Grundriß der Makromolekularen Chemie, Springer-Verlag 1962, S. 107 ff und 159, siehe Vergleichsbeispiel I). Die niedrigen Ausbeuten von bis zu max. 50 % in den beschriebenen Literaturbeispielen kommen ebenfalls durch die konkurrierenden Polymerisationen als Nebenreaktionen zustande. Die gewünschten Reaktionen sind in manchen Fällen sogar so langsam, daß die Polymerisation zur Hauptreaktion werden kann. (Houben-Weyl, Methoden der org. Chemie, Band 12/1, S. 259 - 260). Überraschenderweise gelingt es durch den erfindungsgemäßen Zusatz von protischen organischen Substanzen, daß die Polymerisation weitgehend in den Hintergrund gedrückt wird und die 1 : 1 - Addukte der Formel (I) in nahezu quantitativen Ausbeuten gebildet werden.

Das erfindungsgemäße Verfahren ist außerdem insofern als überraschend anzusehen, als gerade durch Zusatz von protischen organischen Substanzen zu den in der Literatur beschriebenen Umsetzungen, in denen Phosphorkomponenten der Formel (II) mit ungesättigten Fettsäuren umgesetzt werden, weniger als 30 % Ausbeute und damit noch schlechtere Ausbeuten an den gewünschten 1 : 1 - Addukten erhalten werden (siehe Vergleichsbeispiel II).

Als protische organische Substanzen werden vorzugsweise Alkohole, insbesondere C₁-C₆-Alkohole wie z.B. Methanol, Ethanol, Propanol, Isopropanol, n-, i-, t- und 2-Butanol, ferner mehrwertige Alkohole wie Ethandiol und Glycerin, C₁-C₆-Mercaptane, wie z.B. Methylmercaptan, Ethylmercaptan, Propylmercaptan und 1,2-Ethandithiol, Amine, insbesondere Mono- oder Di-(C₁-C₆-Alkyl)-amine wie z.B. Methylamin, Ethylamin, Dimethylamin und Propylamin, Phenole, Thiophenole, Aniline und ähnliche Verbindungen eingesetzt. Obwohl die genannten Substanzen wegen ihrer protischen Eigenschaften allgemein auch als "Derivate" des Wassers bezeichnet werden, darf in dem erfindungsgemäßen Verfahren im Gegensatz zu den beschriebenen organischen protischen Verbindungen jedoch nicht mit Wasser gearbeitet werden, da Wasser die Phosphorkomponenten der Formel (II) rasch hydrolisiert (Sander, Chem. Ber. 93 (1960) 1223). Weil mit Wasser als protischer Substanz wegen Hydrolysereaktionen überhaupt keine Produkte der Formel (I) erhalten werden können (siehe auch Vergleichsbeispiel III), war es unerwartet, daß sich zur Erzielung hoher Selektivitäten und Ausbeuten die erfindungsgemäß einsetzbaren protischen organischen Substanzen eignen.

Die bei dem erfindungsgemäßen Verfahren mindestens äquimolar eingesetzten protischen organischen Substanzen R-H dienen als Reaktanten und gegebenenfalls als Lösungsmittel und werden dem Reaktionsverlauf entsprechend zumindest zum Teil zu beispielsweise Ethern, Thioethern, Aminen, Phenetolen, Thiophenetolen bzw.substituierten Anilinen der Formel R-R⁸ umsetzt, wobei R⁸ die oben genannte Bedeutung hat. Vorzugsweise werden die Produkte R-R⁸ während oder am Ende der Reaktion aus der Reaktionsmischung, beispielsweise durch Destillation, entfernt. Überschüssiger Reaktant bzw. Lösungsmittel R-H wird vorzugsweise am Ende der Reaktion durch Destillation unter reduziertem Druck entfernt.

Im erfindungsgemäßen Verfahren sind auch Carbonsäuren ausgeschlossen. Werden bei dem erfindungsgemäßen Verfahren als protische Substanzen organische Säuren, wie z. B. Ameisensäure oder Essigsäure, eingesetzt, so werden praktisch keine Produkte der Formel (I) erhalten (siehe Vergleichsbeispiel IV). Daraus ergibt sich, daß die protische organische Substanz nicht zu saure Eigenschaften besitzen darf. Ob eine Substanz im erfindungsgemäßen Sinne geeignet ist, läßt sich leicht in einem Vorversuch feststellen.

Das erfindungsgemäße Verfahren wird beispielsweise so durchgeführt, daß man die Verbindungen der Formel (II) in der protischen organischen Substanz löst und die Alkene (III) bei Temperaturen zwischen -20°C und 150°C, vorzugsweise 0 - 100°C, in die Reaktionsmischung eindosiert. Eine simultane Zugabe der Komponenten (II) und (III) in die protische organische Substanz ist ebenfalls möglich.
Ebenso kann auch die Alkenkomponente (III) zusammen mit der protischen organischen Substanz vorgelegt und die Phosphorkomponente (II) in diese Lösung eindosiert werden.
Die protischen organischen Substanzen werden mindestens äquimolar eingesetzt. In mehr als äquimolarer Menge können sie zusätzlich im Sinne eines organischen Lösungsmittels eingesetzt werden.
Das Verfahren kann ohne Lösungsmittel oder mit überschüssiger protischer organischer Substanz als Lösungsmittel und/oder in Gegenwart von üblichen unter den Reaktionsbedingungen inerten organischen Lösungsmitteln durchgeführt werden. Letztgenannte Lösungsmittel sind beispielsweise Lösungsmittel wie gegebenenfalls halogenierte, aliphatische, cycloaliphatische, aromatische oder araliphatische Kohlenwasserstoffe, aliphatische oder cycloaliphatische Ether, z.B. Polyglykoldialkylether, sowie Ketone und Ester. Es ist zweckmäßig, das Verfahren unter Inertgasatmosphäre, beispielsweise unter Stickstoff auszuführen, um störende Einflüsse von Sauerstoff auf die Reaktion zu vermeiden.

Das erfindungsgemäße Verfahren kann kontinuierlich oder diskontinuierlich durchgeführt werden.

Das erfindungsgemäße Verfahren wird nachfolgend durch einige Beispiele erläutert.

### BEISPIEL 1:

### 3-(Methoxy-methyl-phosphinyl)-propionsäuremethylester

80 g Methanol werden in 216 g Methanphosphonigsäuredimethylester unter Stickstoffgas bei Raumtemperatur gemischt und bei Raumtemperatur mit 172 g Acrylsäuremethylester tropfenweise versetzt. Die Temperatur steigt auf 70°C. Nach beendetem Zutropfen und Nachrühren für 1 Stunde haben sich ca. 90 g Dimethylether in einer angebrachten Kühlfalle abgeschieden. Anschließend wird das überschüssige Methanol als Lösungsmittel im Vakuum abdestilliert. Man erhält 365 g Rohausbeute mit einer Reinheit von 96,4 %, was einer Ausbeute von 97,7 % d. Th. entspricht. Der Siedepunkt einer destillierten Probe ist 96°C bei 0,027 mbar. Das ¹H-NMR-Spektrum und die CHP-Analyse des Produkts entsprechen denen einer Vergleichsprobe, die auf unabhängigem Wege synthetisiert worden ist.

### BEISPIEL 2:

### 3-(Methoxy-methyl-phosphinyl)-propionsäureethylester

In einem Kolben mit Stickstoffüberlagerung und angebrachter Kühlfalle werden 216 g Methanphosphonigsäuredimethylester vorgelegt, auf 60°C erwärmt und mit einer Mischung aus 200 g Acrylsäureethylester und 100 g Methanol innerhalb von 1 Stunde tropfenweise versetzt, wobei die Temperatur auf 65°C steigt. Nach zusätzlichem Rühren von 1 Stunde sind insgesamt 91 g Dimethylether in der Kühlfalle aufgefangen worden. Das überschüssige Methanol wird im Vakuum abdestilliert. Es werden 362 g Rohausbeute mit einer Reinheit von 97,3 % erhalten, was einer Ausbeute von 97,9 % d. Th. entspricht. Der Siedepunkt einer Probe ist bei 0,013 mbar 100 - 102°C.

### BEISPIEL 3:

### 3-(Methoxy-methyl-phosphinyl)-propionsäuremethylester

Eine Mischung von 86 g Acrylsäuremethylester und 80 g Ethanol werden innerhalb von 30 min unter Stickstoffschutzgasatmosphäre zu einer vorgelegten Lösung von 108 g Methanphosphonigsäuredimethylester bei 60°C eingetropft. Es wird für eine Stunde bei 60°C nachgerührt. Insgesamt sind 55 g Methylethylether in der Kühlfalle aufgefangen worden. Danach wird das überschüssige Ethanol im Vakuum abdestilliert. Es werden 184 g Rohausbeute mit einer Reinheit von 95,4 % erhalten, was einer Ausbeute von 97,5 % d. Th. entspricht.

### BEISPIEL 4:

### 3-(Methoxy-ethyl-phosphinyl)-propionsäureamid

Eine Mischung von 71 g Acrylsäureamid und 120 g n-Propylamin werden unter Stickstoffatmosphäre bei Raumtemperatur vermischt und auf 50°C erhitzt. Innerhalb von 30 min werden 122 g Ethanphosphonigsäuredimethylester in die Reaktionslösung eingetropft. Es wird für 5 Stunden bei Rückflußtemperatur nachgerührt und das Lösungsmittel (Leichtsieder wie überschüssiges Propylamin + N-Methyl-N-Propylamin) unter reduziertem Druck abdestilliert. Es werden 175 g Rohausbeute mit einer Reinheit von 94,4 % erhalten, was einer Ausbeute von 92,3 % d. Th. entspricht.

Das ¹H-NMR-Spektrum und die CHP-Analyse des Produkts stimmt mit den entsprechenden Daten einer Vergleichsprobe überein, die auf unabhängigem Weg synthetisiert wurde.

### BEISPIEL 5:

### 3-(Ethoxy-propyl-phosphinyl)-propionsäurenitril

In eine Mischung von 160 g Propanphosphonigsäurediethylester in 100 g n-Propylmercaptan werden bei 70°C Reaktionstemperatur 53 g Acrylsäurenitril über einen Zeitraum von 2 Stunden unter Stickstoffgasatmosphäre eingetropft. Nach weiteren 3 Stunden wird das Lösungsmittel (Leichtsieder wie C₃H₇SC₂H₅ und überschüssiges C₃H₇SH) unter reduziertem Druck abdestilliert, und man erhält 173 g Rohausbeute mit einer Reinheit von 95,4 % , was einer Ausbeute von 94,4 % d. Th. entspricht. Der Siedepunkt des Produkts beträgt bei 0,027 mbar 117 - 118°C.

### BEISPIEL 6:

### 3-(Ethoxycarbonyl)-3-(Ethoxy-ethyl-phosphinyl)-propionsäureethylester

In eine Mischung von 140 g Ethanphosphonigsäurediethylester in 46 g Ethanol werden unter Stickstoffschutzgasatmosphäre bei 65 - 70°C 172 g Fumarsäurediethylester langsam zugegeben. Nach weiteren 3 Stunden wird das Lösungsmittel (überschüssiges Ethanol und Diethylether) unter reduziertem Druck abdestilliert und man erhält 285 g Rohprodukt mit einer Reinheit von 95,7 %, was einer Ausbeute von 90,9 % d. Th. entspricht.

¹H-NMR-Spektrum und CHP-Analyse stimmen mit denen einer auf unabhängigem Weg synthetisierten Vergleichsprobe überein.

### BEISPIEL 7:

### 3-(Dimethoxyphosphinyl)-propionsäuremethylester

Eine Mischung von 86 g Acrylsäuremethylester und 100 g Isobutanol werden unter Stickstoffatmosphäre bei Raumtemperatur vermischt und auf 80°C erhitzt. Innerhalb von 1 Stunde werden 124 g Trimethylphosphit in die Reaktionslösung eingetropft. Es wird für 5 Stunden bei Rückflußtemperatur nachgerührt und das Lösungsmittel (Rest an Isobutanol sowie Isobutyl-methylether) unter reduziertem Druck abdestilliert. Es werden 173 g Rohausbeute mit einer Reinheit von 94,1 % erhalten, was einer Ausbeute von 83,0 % d. Th. entspricht. Der Siedepunkt beträgt bei 0,93 mbar 104 - 106°C.

### BEISPIEL 8:

### 3-(Dimethylphosphinyl)-propionsäurenitril

In eine Mischung von 53 g Acrylnitril und 32 g Methanol werden unter Stickstoffatmosphäre bei 20°C langsam 135 g Dimethylphosphinigsäureisobutylester zugegeben, wobei die Temperatur langsam bis auf ca. 60°C ansteigt. Es wird für ca. 3 Stunden nacherhitzt und das Lösungsmittel (Rest an Methanol sowie Isobutylmethylether) abdestilliert. Man erhält 125 g Rohausbeute vom Rohprodukt mit einer Reinheit von 95,3 %, was einer Ausbeute von 90,9 % d. Th. entpricht. Der Siedepunkt einer destillierten Probe beträgt bei 0,013 mbar 98 - 100°C.

### BEISPIEL 9:

### 3-(Dimethylphosphinyl)-3-(methoxycarbonyl)propionsäuremethylester

In eine Lösung von 67 g Ethylenglykol werden bei ca. 70°C aus zwei getrennten Tropftrichtern simultan 135 g Dimethylphosphinigsäureisobutylester und 144 g Maleinsäuredimethylester unter Stickstoffschutzgasatmosphäre getropft. Nach einer weiteren Stunde wird unter reduziertem Druck andestilliert, d.h. werden unter reduziertem Druck flüchtige Anteile schonend abdestilliert. Man erhält 215 g Rohprodukt mit einer Reinheit von 95,2 %, was einer Ausbeute von 91,8 % d. Th. entspricht.

¹H-NMR-Spektrum und CHP-Analyse entsprechen denen einer unabhängig synthetisierten Vergleichsprobe. Der Siedepunkt des Produkts beträgt bei 0,013 mbar 128 - 130°C.

### BEISPIEL 10:

### 3-(Phenylmethoxyphosphinyl)-2-chloropropionsäuremethylester

In eine Lösung aus 120,5 g 2-Chloracrylsäuremethylester und 94 g Phenol werden bei 20°C 138 g Phenylphosphonigsäuredimethylester unter Stickstoff langsam zugegeben. Nach 3 Stunden Nachreaktionszeit bei 70°C wird Phenetol unter reduziertem Druck abdestilliert. Man erhält als Rückstand 267 g Rohprodukt mit einer Reinheit von 93,0 %, was einer Ausbeute von 90,1 % d. Th. entspricht.

Das ¹H-NMR-Spektrum und die CHP-Analyse des Produkts entsprechen denen einer unabhängig synthetisierten Vergleichsprobe.

### VERGLEICHSBEISPIEL I: (ohne protische organische Substanz)

In 108 g Methanphosphonigsäuredimethylester werden bei 70°C 86 g Acrylsäuremethylester gegeben und noch 4 Stunden bei 70°C erhitzt. Nach Aufarbeitung des Reaktionsgemisches durch Andestillieren unter reduziertem Druck werden als Rückstand 194 g eines hochviskosen Oels erhalten, das nach dem ¹H-NMR und ³¹P-NMR-Spektrums den gewünschten 3-(Dimethylphosphinyl)-propionsäuremethylester nicht enthält. Bei der destillativen Aufarbeitung kann kein destillierbares Produkt erhalten werden, was auf einen polymeren Versuchsablauf hindeutet.

### VERGLEICHSBEISPIEL II: analog den Literaturbeispielen (Houben-Weyl, Methoden der org. Chemie, Band 12/1, S. 259-260 und dort zitierter Literatur)

In eine Lösung aus 86 g Methacrylsäure und 32 g Methanol werden 108 g Methanphosphonigsäuredimethylester innerhalb von 30 min bei 70°C eingetropft. Nach einer Nachreaktionszeit von 3 Stunden wird unter reduziertem Druck andestilliert.

Man erhält 59 g 3-(Dimethylphosphinyl)-2-methylpropionsäure mit einer Reinheit von 91,1 %, was einer Ausbeute von 29,5 % d. Th. entpricht.

### VERGLEICHSBEISPIEL III: (mit Wasser als protischer Substanz)

In eine Lösung von 86 g Acrylsäuremethylester und 20 g Wasser werden bei 25°C beginnend 108 g Methanphosphonigsäuredimethylester tropfenweise innerhalb von 30 min zugegeben. Während der Zugabe steigt die Temperatur bis auf 65°C. Es wird für 3 Stunden bei 70°C nacherhitzt.

Nach Aufarbeitung des Reaktionsgemisches durch Andestillieren im Vakuum wird kein 3-(Dimethylphosphinyl)-propionsäuremethylester erhalten. Dagegen erhält man in 91,4 %iger Ausbeute und 94,4 %iger Reinheit das Hydrolyseprodukt Methanphosphonigsäuremethylester, das durch Destillation in einer Menge von 91 g isoliert werden konnte. Der Siedepunkt der destillierten Probe ist 55 - 58°C bei 10 - 15 Torr. Das ¹H-NMR-Spektrum und die CHP-Analyse entspricht der Verbindung aus einer Vergleichsprobe, die auf unabhängigem Wege synthetisiert wurde.

### VERGLEICHSBEISPIEL IV: (mit Ameisensäure als protischer polarer Substanz)

In eine Lösung von 86 g Acryläuremethylester und 50 g Ameisensäure werden bei 70°C über 2 Stunden 108 g Methanphosphonigsäuredimethylester zudosiert und für 2 Stunden bei 70°C nacherhitzt. Nach Aufarbeitung des Reaktionsgemisches durch Andestillieren im Vakuum werden 123 g eines Rohproduktes erhalten, das laut ¹H-NMR, ³¹P-NMR und gaschromatographischer Analyse kein gewünschtes Produkt enthält. Das Reaktionsgemisch setzt sich aus mehreren Substanzen zusammen, wobei es sich hauptsächlich um saure Verbindungen des Phosphors in der Oxydationsstufe V handelt.

## Patentansprüche

1. Verfahren zur Herstellung von Verbindungen der Formel (I) 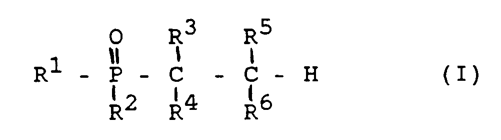 worin
R¹ und R² unabhängig voneinander Alkyl, Alkoxy oder, gegebenenfalls substituiertes, Phenyl,
R³ und R⁵ unabhängig voneinander Wasserstoff, Alkyl, Phenyl, das unsubstituiert oder ein- oder mehrfach durch Halogen oder ein- oder zweifach durch Alkoxy substituiert ist, Alkoxycarbonyl, Alkoxycarbonylalkoxy, Halogen, Cyano, Alkoxy, Alkoxyalkoxy, Alkylcarbonyl, Alkoxycarbonylalkyl, Carbamoyl, Alkylaminocarbonyl oder Dialkylaminocarbonyl,
R⁴ und R⁶ unabhängig voneinander Wasserstoff, Alkyl, Phenyl, das unsubstituiert oder ein- oder mehrfach durch Halogen oder ein- oder zweifach durch Alkoxy substituiert ist,Halogen, Alkoxycarbonyl, Alkoxycarbonylalkoxy, Cyano, Alkoxy, Alkoxyalkoxy, Alkylcarbonyl, Alkoxycarbonylalkyl, Carbamoyl, Alkylaminocarbonyl, Dialkylaminocarbonyl oder miteinander verbunden einen bivalenten Rest der Formel
- CO - R⁷ - CO -,
in welcher
R⁷ Sauerstoff, ein Rest der Formel NR*, worin R* für Wasserstoff, C₁-C₆-Alkyl oder Phenyl, das unsubstituiert oder ein- oder mehrfach durch Halogen substituiert ist, steht, oder Schwefel ist,
bedeuten, dadurch gekennzeichnet, daß man eine Verbindung der Formel (II) 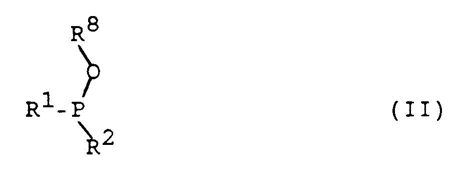 worin
R¹ und R² die vorbeschriebenen Bedeutungen haben und
R⁸ Alkyl oder gegebenenfalls substituiertes Phenyl ist,
zusammen mit einer Verbindung der Formel (III) 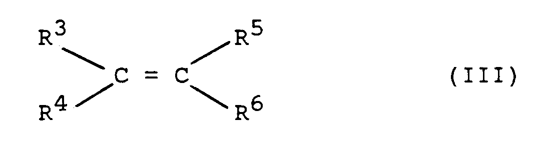 worin R³,R⁴,R⁵,R⁶ und R⁷ die vorbeschriebenen Bedeutungen haben,
und
mit einer mindestens äquimolaren Menge einer protischen organischen Substanz, ausgenommen Carbonsäuren, umsetzt.

2. Verfahren nach Anspruch 1, dadurch gekennzeichnet, daß
R¹ und R² unabhängig voneinander C₁-C₈-Alkyl, Phenyl oder C₁-C₆-Alkoxy,
R₃ und R₅ unabhängig voneinander Wasserstoff, C₁-C₆-Alkyl, Phenyl, das unsubstituiert oder ein- oder mehrfach durch Halogen substituiert ist, C₂-C₆-Alkoxycarbonyl, C₂-C₆-Alkylcarbonyl, (C₁-C₄-Alkyl)-carbonyl-C₁-C₁₀-alkyl, Halogen, Cyano, C₁-C₆-Alkoxy, (C₁-C₄-Alkoxy)-C₁-C₄-alkoxy, Carbamoyl, N-(C₁-C₄-Alkyl)-aminocarbonyl, N,N-Di-(C₁-C₄-Alkyl)-aminocarbonyl, 1-(C₁-C₄-Alkoxy)-1-hydroxy-methyl oder 1,1-Bis-(C₁-C₄-Alkoxy)-methyl,
R⁴ und R⁶ unabhängig voneinander Wasserstoff, C₁-C₆-Alkyl, Phenyl, das unsubstituiert oder ein- oder mehrfach durch Halogen substituiert ist, C₂-C₆-Alkoxycarbonyl, C₂-C₆-Alkylcarbonyl, (C₁-C₄-Alkyl)-carbonyl-C₁-C₁₀-alkyl, Halogen, Cyano, C₁-C₆-Alkoxy, (C₁-C₄-Alkoxy)-C₁-C₄-alkoxy, Carbamoyl, N-(C₁-C₄-Alkyl)-aminocarbonyl, N,N-Di-(C₁-C₄-Alkyl)-aminocarbonyl, 1-(C₁-C₄-Alkoxy)-1-hydroxy-methyl oder 1,1-Bis-(C₁-C₄-Alkoxy)-methyl oder miteinander verbunden einen bivalenten Rest der Formel
- CO - R⁷ - CO -,
in welcher
R⁷ Sauerstoff, ein Rest der Formel NR*, worin R* für H, (C₁-C₆)-Alkyl oder Phenyl, das unsubstituiert ist oder 1 bis 3fach durch Halogen substituiert ist, steht, oder Schwefel ist,
bedeuten.

3. Verfahren nach Anspruch 1 oder 2, dadurch gekennzeichnet, daß
R¹ und R² unabhängig voneinander Methyl, Ethyl, Methoxy, Ethoxy oder Phenyl,
R³ Wasserstoff,
R⁴ Wasserstoff oder (C₁-C₄-Alkoxy)-carbonyl,
R⁵ Wasserstoff und
R⁶ Wasserstoff, Halogen, Cyano, (C₁-C₄-Alkoxy)-carbonyl oder Carbamoyl
bedeuten.

4. Verfahren gemäß einem oder mehreren der Ansprüche 1 bis 3, dadurch gekennzeichnet, daß man als protische, organische Substanzen Alkohole, Mercaptane, Amine, Phenole, Thiophenole oder Aniline oder Gemische der vorstehenden Substanzen einsetzt.

5. Verfahren gemäß einem oder mehreren der Ansprüchen 1 bis 4, dadurch gekennzeichnet, daß die Reaktionstemperatur für die Umsetzung der Verbindungen (II) und (III) zwischen -20°C und 150°C liegt.

6. Verfahren gemäß Anspruch 5, dadurch gekennzeichnet, daß die Reaktionstemperatur für die Umsetzung der Komponenten (II) und (III) zwischen 0°C und 100°C liegt.

7. Verfahren gemäß einem oder mehreren der Ansprüche 1 bis 6, dadurch gekennzeichnet, daß man das Verfahren mit üblichen organischen Lösungsmitteln oder deren Gemischen durchführt.

8. Verfahren nach Anspruch 7, dadurch gekennzeichnet, daß als organisches Lösungsmittel überschüssige protische organische Substanz eingesetzt wird.

9. Verfahren gemäß einem oder mehreren der Ansprüche 1 bis 8, dadurch gekennzeichnet, daß man unter Schutzgasatmosphäre arbeitet.

## Claims

1. A process for the preparation of compounds of the formula (I) 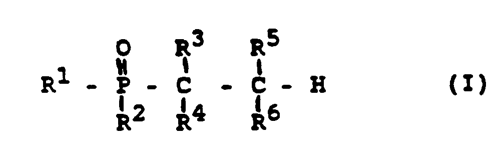 in which
R¹ and R² independently of one another are alkyl, alkoxy, unsubstituted or substituted phenyl,
R³ and R⁵ independently of one another are hydrogen, alkyl, unsubstituted phenyl or phenyl mono- or multisubstituted by halogen or mono- or disubstituted by alkoxy; or are alkoxycarbonyl, alkoxycarbonylalkoxy, halogen, cyano, alkoxy, alkoxyalkoxy, alkylcarbonyl, alkoxycarbonylalkyl, carbamoyl, alkylaminocarbonyl or dialkylaminocarbonyl,
R⁴ and R⁶ independently of one another are hydrogen, alkyl, unsubstituted phenyl or phenyl mono- or multisubstituted by halogen or mono- or disubstituted by alkoxy; or are halogen, alkoxycarbonyl, alkoxycarbonylalkoxy, cyano, alkoxy, alkoxyalkoxy, alkylcarbonyl, alkoxycarbonylalkyl, carbamoyl, alkylaminocarbonyl or dialkylaminocarbonyl; or jointly are a divalent radical of the formula
- CO - R⁷ - CO -,
in which
R⁷ is oxygen, a radical of the formula NR*, in which R* represents hydrogen, C₁-C₆-alkyl, unsubstituted phenyl or phenyl mono- or multisubstituted by halogen; or is sulfur,
which comprises reacting a compound of the formula (II) 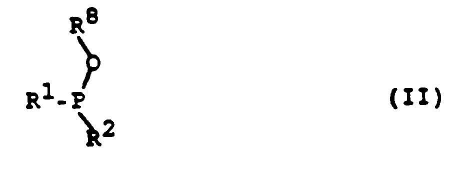 in which
R¹ and R² have the meanings defined above and
R⁸ is alkyl or optionally substituted phenyl,
together with a compound of the formula (III) 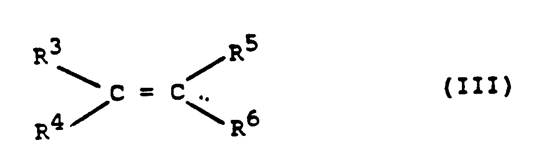 in which R³, R⁴, R⁵, R⁶ and R⁷ have the meanings defined above,
and
with at least an equimolar amount of a protic organic substance except carboxylic acids.

2. The process as claimed in claim 1, wherein
R¹ and R² independently of one another are C₁-C₈-alkyl, phenyl or C₁-C₆-alkoxy,
R³ and R⁵ independently of one another are hydrogen, C₁-C₆-alkyl, unsubstituted phenyl or phenyl mono- or multisubstituted by halogen; or are C₂-C₆-alkoxycarbonyl, C₂-C₆-alkylcarbonyl, (C₁-C₄-alkyl)carbonyl-C₁-C₁₀-alkyl, halogen, cyano, C₁-C₆-alkoxy, (C₁-C₄-alkoxy)-C₁-C₄-alkoxy, carbamoyl, N-(C₁-C₄-alkyl)aminocarbonyl, N,N-di(C₁-C₄-alkyl)aminocarbonyl, 1-(C₁-C₄-alkoxy)-1-hydroxymethyl or 1,1-bis(C₁-C₄-alkoxy)methyl,
R⁴ and R⁶ independently of one another are hydrogen, C₁-C₆-alkyl, unsubstituted phenyl or phenyl mono- or multisubstituted by halogen; or are C₂-C₆-alkoxycarbonyl, C₂-C₆-alkylcarbonyl, (C₁-C₄-alkyl)carbonyl-C₁-C₁₀-alkyl, halogen, cyano, C₁-C₆-alkoxy, (C₁-C₄-alkoxy)-C₁-C₄-alkoxy, carbamoyl, N-(C₁-C₄-alkyl)aminocarbonyl, N,N-di(C₁-C₄-alkyl)aminocarbonyl, 1-(C₁-C₄-alkoxy)-1-hydroxymethyl or 1,1-bis(C₁-C₄-alkoxy)methyl; or jointly are a divalent radical of the formula
- CO - R⁷ - CO -,
in which
R⁷ is oxygen, a radical of the formula NR*, in which R* represents hydrogen, (C₁-C₆)-alkyl, unsubstituted phenyl or phenyl mono- to trisubstituted by halogen; or is sulfur.

3. The process as claimed in claim 1 or 2, wherein
R¹ and R² independently of one another are methyl, ethyl, methoxy, ethoxy or phenyl,
R³ is hydrogen,
R⁴ is hydrogen or (C₁-C₄-alkoxy)carbonyl,
R⁵ is hydrogen and
R⁶ is hydrogen, halogen, cyano, (C₁-C₄-alkoxy)-carbonyl or carbamoyl.

4. The process as claimed in one or more of claims 1 to 3, wherein alcohols, mercaptans, amines, phenols, thiophenols or anilines or mixtures of these substances are used as protic organic substances.

5. The process as claimed in one or more of claims 1 to 4, wherein the temperature for the reaction of the compounds (II) and (III) is between -20°C and 150°C.

6. The process as claimed in claim 5, wherein the temperature for the reaction of the components (II) and (III) is between 0°C and 100°C.

7. The process as claimed in one or more of claims 1 to 6, wherein the process is carried out in the customary organic solvents or mixtures thereof.

8. The process as claimed in claim 7, wherein excess protic organic substance is used as organic solvent.

9. The process as claimed in one or more of claims 1 to 8, wherein the reaction is performed in an inert gas atmosphere.

## Revendications

1. Procédé pour préparer des composés de formule (I) 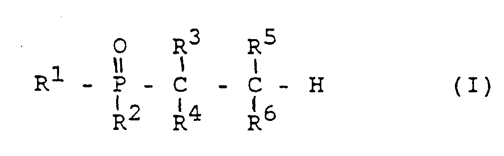 dans laquelle
R¹ et R², indépendamment l'un de l'autre, sont chacun un radical alkyle, alcoxy ou phényle éventuellement substitué,
R³ et R⁵ sont, chacun indépendamment l'un de l'autre, un hydrogène ou un radical alkyle, phényle non substitué ou une ou plusieurs fois substitué par des halogènes ou une ou deux fois par des radicaux alcoxy, alcoxycarbonyle, alcoxycarbonylalcoxy, halogéno, cyano, alcoxy, alcoxyalcoxy, alkylcarbonyle, alcoxycarbonylalkyle, carbamoyle, alkylaminocarbonyle ou dialkylaminocarbonyle,
R⁴ et R⁶, indépendamment l'un de l'autre, sont chacun un hydrogène ou un radical alkyle, phényle non substitué ou une ou plusieurs fois substitué par des halogènes ou une ou deux fois par des radicaux alcoxy, halogéno, alcoxycarbonyle, alcoxycarbonylalcoxy, cyano, alcoxy, alcoxyalcoxy, alkylcarbonyle, alcoxycarbonylalkyle, carbamoyle, alkylaminocarbonyle, dialkylaminocarbonyle ou encore, liés l'un à l'autre, forment un radical divalent de formule
- CO - R⁷ - CO-,
dans laquelle
R⁷ est un oxygène, un radical de formule NR*, où R* est un hydrogène ou un radical alkyle en C₁-C₆ ou phényle, non substitué ou une ou plusieurs fois substitué par des halogènes, ou encore le soufre,
caractérisé en ce qu'on fait réagir un composé de formule (II) 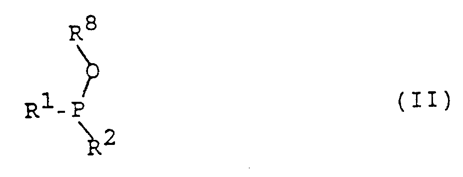 dans laquelle
R¹ et R² ont les significations données ci-dessus, et
R⁸ est un radical alkyle ou phényle éventuellement substitué,
avec un composé de formule (III) 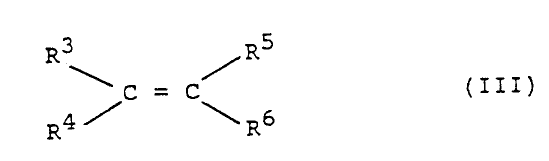 dans laquelle R³, R⁴, R⁵, R⁶ et R⁷ ont les significations données ci-dessus, et
avec une quantité au moins équimolaire d'une substance organique protique, à l'exclusion des acides carboxyliques.

2. Procédé selon la revendication 1, caractérisé en ce que :
R¹ et R², indépendamment l'un de l'autre, sont chacun un radical alkyle en C₁-C₈, phényle ou alcoxy en C₁-C₆,
R³ et R⁵, indépendamment l'un de l'autre, sont chacun un hydrogène ou un radical alkyle en C₁-C₆, phényle non substitué ou une ou plusieurs fois substitué par des halogènes, (alcoxy en C₂-C₆)carbonyle, (alkyle en C₂-C₆)carbonyle, (alkyle en C₁-C₄)carbonyle-(alkyle en C₁-C₁₀), halogéno, cyano, alcoxy en C₁-C₆, (alcoxy en C₁-C₄)-(alcoxy en C₁-C₄), carbamoyle, N-(alkyle en C₁-C₄)-aminocarbonyle, N,N-di-(alkyle en C₁-C₄)-aminocarbonyle, 1-(alcoxy en C₁-C₄)-1-hydroxyméthyle, ou 1,1-bis-(alcoxy en C₁-C₄)-méthyle,
R⁴ et R⁶, indépendamment l'un de l'autre, sont chacun un hydrogène ou un radical alkyle en C₁-C₆, phényle non substitué ou une ou plusieurs fois substitué par des halogènes, (alcoxy en C₂-C₆)carbonyle, (alkyle en C₂-C₆)carbonyle, (alkyle en C₁-C₄)carbonyle-(alkyle en C₁-C₁₀), halogéno, cyano, alcoxy en C₁-C₆, (alcoxy en C₁-C₄)-(alcoxy en C₁-C₄), carbamoyle, N-(alkyle en C₁-C₄)-aminocarbonyle, N,N-di-(alkyle en C₁-C₄)-aminocarbonyle, 1-(alcoxy en C₁-C₄)-1-hydroxyméthyle, ou 1,1-bis-(alcoxy en C₁-C₄)-méthyle, ou encore, liés l'un à l'autre, forment un résidu divalent de formule
- CO - R⁷ - CO-,
dans laquelle
R⁷ est un oxygène, un radical de formule NR*, où R* est un hydrogène ou un radical alkyle en C₁-C₆ ou phényle, non substitué ou un à trois fois substitué par des halogènes, ou encore le soufre.

3. Procédé selon la revendication 1 ou 2, caractérisé en ce que :
R¹ et R², indépendamment l'un de l'autre, sont chacun le radical méthyle, éthyle, méthoxy, éthoxy ou phényle,
R³ est un hydrogène,
R⁴ est un hydrogène ou un radical (alcoxy en C₁-C₄)-carbonyle,
R⁵ est un hydrogène et
R⁶ est un hydrogène ou un radical halogéno, cyano, (alcoxy en C₁-C₄)-carbonyle ou carbamoyle.

4. Procédé selon l'une ou plusieurs des revendications 1 à 3, caractérisé en ce qu'on utilise comme substances organiques protiques des alcools, des mercaptans, des amines, des phénols, des thiophénols ou des anilines, ou encore des mélanges de ces substances.

5. Procédé selon l'une ou plusieurs des revendications 1 à 4, caractérisé en ce que la température de la réaction des composés (II) et (III) est comprise entre -20 et 150°C.

6. Procédé selon la revendication 5, caractérisé en ce que la température de la réaction des constituants (II) et (III) est comprise entre 0 et 100°C.

7. Procédé selon l'une ou plusieurs des revendications 1 à 6, caractérisé en ce qu'on met en oeuvre le procédé avec des solvants organiques usuels ou leurs mélanges.

8. Procédé selon la revendication 7, caractérisé en ce qu'on utilise comme solvant organique une substance organique protique en excès.

9. Procédé selon l'une ou plusieurs des revendications 1 à 8, caractérisé en ce qu'on travaille sous une atmosphère d'un gaz protecteur.
